# EUROPÄISCHE PATENTSCHRIFT

(11) **EP 0 664 524 B1**
(45) Veröffentlichungstag und Bekanntmachung des Hinweises auf die Patenterteilung: **19.12.2001**
(21) Anmeldenummer: 95100494.4
(22) Anmeldetag: 16.01.1995
(51) Int. Cl.: G06K 19/077

(54) **Verfahren zum Verkappen eines Chipkartenmoduls**
Method of encapsulating a chipcard module
Méthode à encapsuler un module de carte à puce

(30) Priorität: 20.01.1994 DE 4401588
(43) Veröffentlichungstag der Anmeldung: 26.07.1995
(73) Patentinhaber: ODS Landis & Gyr GmbH & Co. KG, 85375 Neufahrn (DE)
(72) Erfinder: Schmidt, Frank-Thomas, D 99891 Fischbach (DE); Schandock, Dieter, D 99846 Seebach (DE)
(74) Vertreter: Grünecker, Kinkeldey, Stockmair & Schwanhäusser Anwaltssozietät

(56) Entgegenhaltungen:
- EP-A- 0 277 854
- EP-A- 0 359 632
- EP-A- 0 377 937
- EP-A- 0 472 768
- WO-A-92/20506
- US-A- 4 867 839
- PATENT ABSTRACTS OF JAPAN vol. 017, no. 657 (E-1470), 6. Dezember 1993 (1993-12-06) & JP 05 218119 A (NIPPON STEEL CORP), 27. August 1993 (1993-08-27)

## Beschreibung

Die Erfindung betrifft ein Verfahren gemäß Oberbegriff des Patentanspruchs 1 und einen Chipkartenmodul gemäß Oberbegriff von Anspruch 7.

Chipkarten-Module werden als aktive Baugruppen u.a. für die Herstellung von Telefon-, Buchungs- und Prozessorkarten sowie als kompakte Baugruppen in anderen elektronischen Karten, Baugruppen und Bauteilen verwendet, und enthalten integrierte Schaltkreise und elektronische Bauelemente, für bestimmte Funktionen. Ein Chipkarten-Modul wird auf einem Träger auf Kunststoff-, Mineral- oder Metallbasis oder deren Verbunde aufgebaut, wobei gemäß bekannten Methoden ein IC-Baustein oder andere aktive und passive Bauelemente am Träger angebracht werden. Durch Löten oder Bonden werden elektrisch leitende Verbindungen hergestellt. Gegen äußere Einflüsse wie Berührung, Biegung, Korrosion, Druck (im physikalischen Sinn), Wärme und Strahlung etc. ist der Modul empfindlich. Der Modulrohling wird deshalb, z.B. durch Verkappen in eine einfach handhabbare, beanspruchbare, geometrisch definierte und stabile Form gebracht.

Bei einem solchen, aus EP 0 359 632 A bekannten Verfahren wird als den IC-Baustein aufweisendes Trägermaterial ein Leadframe aus Metall in die Form eingelegt und um den IC-Baustein ein Rahmen aus einem isolierenden Material wie ABS oder PVC gespritzt. Dieser Rahmen definiert einen Aufnahmehohlraum für die eigentliche Verkappung. Die Verkappung wird dann in den Aufnahmehohlraum eingebracht, nimmt dessen Form an und wird durch dessen Höhe in ihrer Höhe festgelegt. Die Verkappung ist ein isolierendes Schutzmaterial wie Epoxidharz oder Silikonharz. Die Verkappung haftet an den glatten Flächen des Rahmens, umschließt den IC-Baustein und dessen Bonddrähte. Die Halterung der Verkappung ist bestimmt durch deren Haftung an den glatten Flächen des Rahmens und an glatten, ununterbrochenen O-berflächenabschnitten des Trägermaterials.

Aus US 4 867 839 A ist es bekannt, in einer Kunststoffschicht mittels einer Raupenkupferfolie Verankerungshohlräume zu schaffen, diese durch Abziehen der Kupferfolie freizulegen, und anschließend in den Verankerungshohlräumen einen Kupferfilm festzulegen.

Aus JP 05 21 81 10 A (Patent Abstracts of Japan 017/657) ist ein Verfahren entnehmbar, bei dem ein Filmglied und ein Filmträger übereinandergelegt zwischen obere und unteren Formteilen in einem Formhohlraum platziert und mit einem Versiegelungsharz ober- und unterseitig umspritzt werden. Nach dem Erhärten des Harzes kann das Filmglied von dem Filmträger entfernt werden, um eine Restharzauflage abzuziehen.

Allgemeiner technologischer Hintergrund ist ferner zu finden in EP 0 377 937 A, EP 0 277 854 A, EP 0 472 768 A und WO92/20506 A.

Der Erfindung liegt die Aufgabe zugrunde, ein Verfahren der eingangs genannten Art sowie einen Chipkartenmodul anzugeben, bei denen kostengünstig und verfahrenstechnisch einfach hohe und gleichbleibende Maßgenauigkeit, gute Qualität und hohe Belastbarkeit des Verbindungsbereiches zwischen der Verkappung und dem Trägermaterial über lange Gebrauchsdauer erreichbar sind.

Die gestellte Aufgabe wird erfindungsgemäß mit dem Verfahren gemäß Anspruch 1 und dem Chipkartenmodul gemäß Anspruch 7 gelöst.

Mit dem Verfahren lässt sich auf einfache Weise und exakt reproduzierbar eine maßgenaue Modulform gewünschter Geometrie erreichen, wobei ein oder mehrere IC-Bausteine und andere aktive und passive elektronische Bauelemente sicher und schonend eingebettet werden. Durch die vielen, speziell ausgebildeten Verankerungshohlräume wird zusätzlich zur chemischen Haftung der Verkappung an der Oberfläche des Trägermaterials ein fester formschlüssiger Verbund zwischen dem Trägermaterial und der Spritzmasse erreicht, da die Spritzmasse, die sich ausgehend von der

Oberfläche erweiternden Verankerungshohlräume zumindest teilweise ausgefüllt und nach dem Aushärten nicht mehr von der Oberfläche abgezogen werden kann. Mittels der formschlüssig verankerten Verkappung wird das gegebenenfalls flexible Trägermaterial stabilisiert, insbesondere im Bereich der elektrischen bzw. elektronischen Komponenten des Moduls.

Der Chipkartenmodul zeichnet sich aufgrund des zusätzlichen Formschlusses zwischen der Verkappung und dem Trägermaterial durch einen außerordentlich stabilen und bruchfesten Aufbau und durch die durch das Formwerkzeug bestimmte, präzise und exakt reproduzierbare Geometrie aus. Derartige Chipkartenmodule sind besonders zur Anwendung in dünnen Telefon-, Zutritts-, Buchungs- und Prozessorkarten verwendbar, da der Träger durch die mit ihm verzahnte Verkappung stabilisiert ist.

Die Verfahrensvariante gemäß Anspruch 2 ist besonders vorteilhaft. Einerseits wird die Spritzmasse auf kürzestem Weg an das Trägermaterial hingebracht. Andererseits kann sich die an sich gewünschte Haftungsfreudigkeit der Spritzmasse im Bereich des Anspritzkanals wegen der dort abgedeckten Oberfläche nicht störend auswirken. Die im Bereich des Anspritzkanals verbleibende Spritzmasse läßt sich sauber vom Trägermaterial und der Verkappung lösen.

Bei der Verfahrensvariante gemäß Anspruch 3 läßt sich das Trägermaterial kostengünstig im Hinblick auf eine dauerhafte und feste Haftung der Verkappung vorbereiten.

Eine spezielle Verfahrensvariante geht aus Anspruch 4 hervor. Diese Vorbehandlung des Trägermaterials ist bisher aus anderen Gründen üblich gewesen. Die auf diese Weise hergestellte Oberflächenstruktur mit den Verankerungshohlräumen wird nun auch in besonders zweckmäßiger Weise für die Verbesserung der Haftung der Verkappung genutzt. Dies ist kostengünstig, weil zur Verbesserung der Haftung keine spezielle andere Vorbehandlung des Trägermaterials erforderlich ist. Dabei wird die wirksame Verankerung auch erreicht, wenn die Verankerungshohlräume nicht senkrecht zur Oberfläche, sondern schräg von der Oberfläche nach innen verlaufen, so daß Hinterschneidungen zum Verankern der Spritzmasse entstehen.

Die Verfahrensvariante gemäß Anspruch 5 ist verfahrenstechnisch einfach.

Die Vorgangsweise gemäß Anspruch 6 ist zweckmäßig, weil bei dieser Temperatur die Spritzmasse auch in kleinste Verankerungshohlräume einzudringen vermag, ohne das Trägermaterial und die darauf angebrachten Komponenten zu gefährden.

Bei der Ausführungsform gemäß Anspruch 8 kann die Spritzmasse im Bereich des Anspritzkanals, der entlang der Oberfläche verläuft, nicht am Trägermaterial haften. Der nach dem Anspritzen verbleibende Steg läßt sich im Bereich des Spritzkanals leicht vom Trägermaterial lösen, gegebenenfalls mit dem daran haftenden Oberflächenschutz.

Bei der Ausführungsform des Chipkartenmoduls gemäß Anspruch 9 wird gewinnbringend die für andere Zwecke hergestellte Oberflächenstruktur zum Verbessern der Haftung der Verkappung eingesetzt. Zum Verankern sind sich nach innen erweiternde und/oder schräg nach innen verlaufende Verankerungshohlräume mit Hinterschneidungen (Anspruch 12) vorgesehen. Die verbesserte Haftung der Verkappung entsteht durch formschlüssiges Verkrallen eingedrungener Spritzmasse.

Bei der Ausführungsform gemäß Anspruch 10 sind die Verankerungshohlräume einfach herstellbar.

Gemäß Anspruch 11 wird die Verkappung ganz- oder teilflächig am Trägermaterial verankert. Dadurch wird auch das Trägermaterial ganz- oder teilflächig stabilisiert.

Anhand der Zeichnung werden Ausführungsformen des Erfindungsgegenstandes erläutert. Es zeigen:
- Fig. 1:: Eine schematische Schnittdarstellung einer Vorrichtung zum Verkappen,
- Fig. 2:: einen vergrößerten Teilschnitt durch einen Chipkarten-Modul,
- Fig. 3:: eine Draufsicht eines Bandes oder Streifens verkappter Chipkarten-Module, und
- Fig. 4:: eine Druntersicht zu Figur 3.

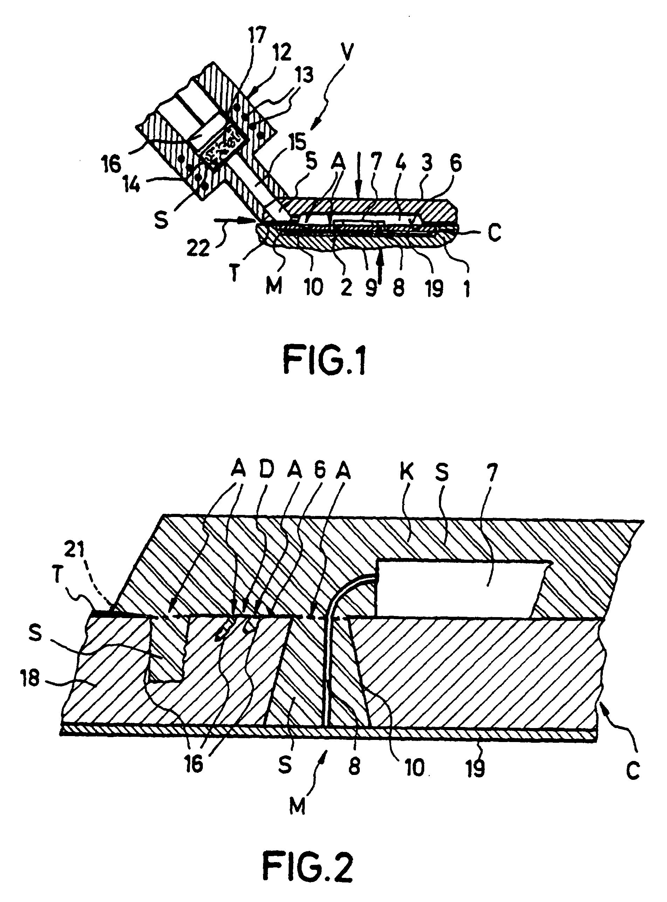

Mit einer Vorrichtung V gemäß Figur 1 werden Chipkarten-Module M mit einer duroplastischen Niederdruck-Spritzmasse S verkappt. In einem Gegenhalter 1 mit einer Auflagefläche 2 ist ein Chipkarten-Modul M so positionierbar, daß er einen offenen Formhohlraum 4 einer Spritzform 3 bis auf einen Anspritzkanal 5 verschließt. Der Chipkarten-Modul M besitzt einen plättchenartigen Träger C, an dessen oder in dessen Oberfläche 6 ein IC-Baustein 7 positioniert ist, der über Kontaktbrücken 8 mit einer an der anderen Oberfläche angebrachten Kontaktschicht 19 elektrisch leitend verbunden ist. Die Kontaktbrücken 8 durchsetzen Durchgangsbohrungen 9 im Träger C. Zusätzlich können Sackbohrungen 10 in den Träger C eingebracht sein, die zur Oberfläche 6 hin offen sind. Darüberhinaus können in der Oberfläche 6 offene, in Figur 1 nicht gezeigte, Verankerungshohlräume A (s. Fig. 2) vorgesehen sein. Die Verankerungshohlräume A sind entweder ganzflächig oder lokal begrenzt vorgesehen.

Der Anspritzkanal 5 wird von der Oberfläche 6 zumindest teilweise begrenzt. Im Bereich des Anspritzkanals 5 ist auf der Oberfläche 6 ein Oberflächenschutz T (ein Trennlack, ein Klebestreifen oder eine Trennschicht) angebracht. Alternativ oder additiv könnte auch ein haftungsarmer Schieber 22 vorgesehen sein, mit dem sich der Anspritzkanal 5 unmittelbar an der Oberfläche 6 absperren läßt.

Ferner ist eine Niederdruck-Spritzpresse 12 Teil der Vorrichtung V. Die Presse 12 enthält eine Heizung 13, um in einer Kammer 14 eine Tablette oder ein Pellet 17 einer duroplastischen Niederdruck-Spritzmasse S in einen niedrigviskosen Zustand überzuführen. Von der Kammer 14 führt ein Kanal 15 zum Anspritzkanal 5. Ein Kolben 16 erzeugt den erforderlichen Druck zum Spritzen der Spritzmasse S an die Oberfläche 6 und in die Verankerungshohlräume A des Trägers C.

Die Presse 12 ist in Fig. 1 mit ihrem Kanal 15 schräg von oben zum Formhohlraum 4 geneigt gezeigt. Es ist aber auch denkbar, die den Kanal 15 im wesentlichen horizontal in den Formhohlraum 4 zu richten und mit dem Kolben 16 von oben nach unten zu arbeiten. Der Gegenhalter 1 und die Form 3 werden in Richtung der Pfeile gegeneinander gepreßt, damit der Formhohlraum 4 sicher verschlossen wird und keine Spritzmasse S seitlich austreten kann.

In Fig. 2 ist ein Teilabschnitt eines fertigen Chipkarten-Moduls M erkennbar. Der Träger C, an dem der IC-Baustein 7 angebracht und mittels der Kontaktbrücken 8 mit der Kontaktfläche 19 elektrisch leitend verbunden ist, besteht aus einem Trägermaterial 18 auf Kunststoff-, Mineral- oder Metallbasis oder deren Verbunde. Die Durchgangsbohrungen 9 (oder Sackbohrungen 10) sind beispielsweise konisch ausgebildet, derart, daß sie sich von der Oberfläche 6 ausgehend erweitern. Die Bohrungen können gebohrt, gestanzt oder gefräst sein. Ferner ist es denkbar, sie durch Erodieren oder mit energiereichen Strahlen zu formen. Weitere Verankerungshohlräume A mit unregelmäßiger Form sind beispielsweise am Trägermaterial 18 (glasfaserverstärktem Epoxidmaterial (FR-4)) in einer speziell rauhen Oberflächenstruktur durch Abätzen eines durch Dentrit-Kupfer-Belag in eine Vorbehandlungsprozeß gebildet, wobei sich Belag mit dem Epoxid-Material in zur Oberfläche 6 offenen Hohlräumen, Spalten, Rissen und dergleichen verbunden war, die nach dem Abätzen freigelegt sind. Die Spritzmasse S dringt beim Anspritzen des Trägers C in die Verankerungshohlräume A, füllt diese zumindest teilweise und verbindet sich auf diese Weise formschlüssig mit dem Trägermaterial 18. Die Verankerungshohlräume A sind zweckmäßigerweise so ausgebildet, daß sie einen Formschluß ermöglichen, mit dem das Abheben der Verkappung K nach oben vermieden wird. Zumindest einige Verankerungshohlräume A erweitern sich nach innen und/oder haben einen von der Senkrechten auf die Oberfläche des Trägermaterials schräg abweichenden Verlauf (Hinterschneidungen) und unregelmäßige Hohlraum-Wände, so daß sich die Spritzmasse S haltbar verkrallt. Die in die Verankerungshohlräume A eingedrungene Spritzmasse S, die auch chemisch durch Adhäsion haftet, wird nach dem Anspritzen, vorzugsweise durch eine Wärmebehandlung, ausgehärtet. Die auf diese Weise gebildete Verkappung (K) umhüllt die elektronischen aktiven und/oder passiven Komponenten. Durch genaue Bemessung des Formhohlraumes 4 ergibt sich eine geometrisch maßgenau reproduzierbare Form des Chipkarten-Moduls M. Die Verkappung K besitzt zweckmäßigerweise eine ebene Oberfläche. Ihre Form kann rund, viereckig oder beliebig vieleckig sein.

In Fig. 2 ist bei T der Oberflächenschutz angedeutet, und bei 21 die Bruchstelle der im Bereich des Spritzkanals 5 entfernten Spritzmasse S. Diese ist zweckmäßigerweise eine Mischung von Sand oder Quarzmehl mit Epoxid und wird durch Wärmeeinwirkung in einen niedrigviskosen Zustand überführt, aus dem sie z.B. innerhalb einer Minute, aushärtet. Bei einem Chipkarten-Modul M für eine Chipkarte mit einer Stärke von ca. 0,8 mm können der Träger C eine Stärke von ca. 0,15 mm und die Verkappung K eine Stärke von ca. 0,55 mm haben.

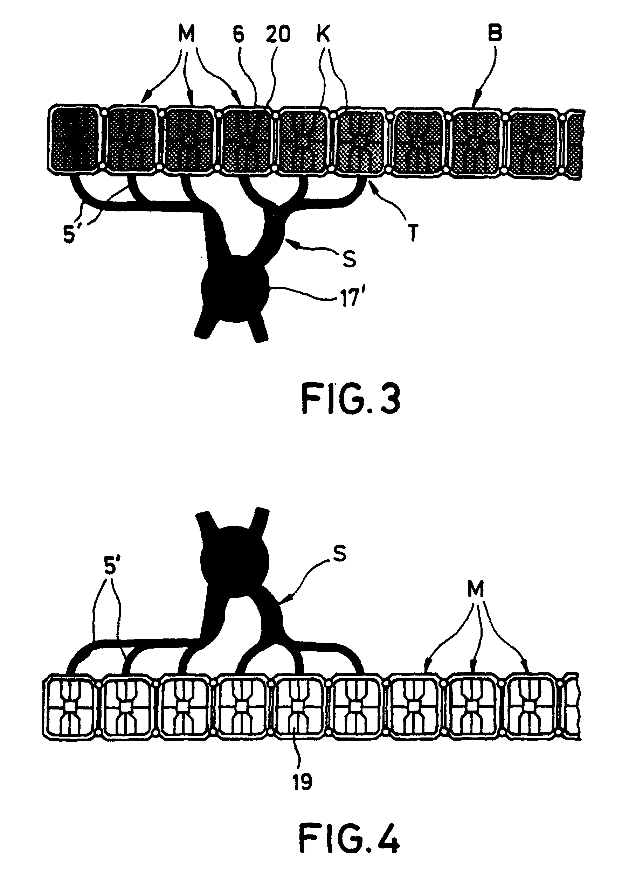

Gemäß Fig. 3 und 4, sind in einem Streifen B aus Modulen M gleichzeitig sechs Module verkappt worden. Jede Verkappung K ist in der Draufsicht annähernd quadratisch mit gerundeten Ekken, und läßt an der Oberfläche 6 einen schmalen Randstreifen 20 frei. Die Anspritzkanäle führen von einer Seite des Streifens B in etwa zur Mitte jedes Formhohlraums. Die Spritzmasse S, von der der nicht ausgepreßte Rest 17' erkennbar ist, bildet Äste 5', die sich zu den Bereichen der Oberfläche 6 erstrecken, an denen jeweils der Oberflächenschutz T angebracht ist. Nach oder vor dem Aushärten der Verkappungen K werden die Äste 5' an den Verkappungen K abgebrochen.

In der Druntersicht von Figur 4 ist an jedem Modul M die Kontaktfläche 19 erkennbar. Die Äste 5' verlaufen in etwa in der Ebene des Streifens B. Die noch mit dem Streifen B verbundenen Äste 5' werden - wie gesagt - weggebrochen. Da die Verkappungen K voneinander getrennt sind, lassen sich auch die Module M später leicht voneinander trennen.

In Fig. 1 ist die Spritzpresse 12 getrennt von der Form 3 vorgesehen und über den Kanal 15 mit dem Anspritzkanal 5 verbunden. Es ist denkbar, die Form 3 (zweckmäßigerweise mit mehreren Formhohlräumen 4) mit der Spritzpresse 12 oder zumindest deren Mundstück zu vereinigen und auch das Widerlager 1 in die Form 3 zu integrieren.

### Beispiel 1:

Im Rahmen des vorbeschriebenen Verfahrens werden zunächst auf einem Träger C aus glasfaserverstärktem Epoxid-Material (FR-4) auf der nicht zu verkappenden Rückseite vergoldete Kupferkontaktbahnen mit offenen Durchkontaktierungen zu Bondinseln auf der Oberfläche 6 und in dem zu verkappenden Bereich angebracht. Dann wird ein IC-Baustein 7 montiert und durch Bondbrücken 8 elektrisch mit den Kontakten verbunden. Anschließend wird der Träger C mit der duroplastischen niederviskosen Niederdruck-Spritzmasse S in einer Verschließpresse bei ca. 180°C durch Anspritzen verkappt. Vor oder nach dem rückstandsfreien Formen und Entfernen der Spritzmasse S im Anspritzkanal 4 wird die Verkappung durch Wärmeeinwirkung in die stabile Endform überführt.

### Beispiel 2:

Am Träger C aus glasfaserverstärktem Epoxid-Material (FR-4) wird eine speziell rauhe Oberflächenstruktur durch Abätzen einer Dentrit-Kupfer-Auflage in einem speziellen Herstellungsprozeß vorbereitet. Auf der nicht zu verkappenden Rückseite sind vergoldete Kupferkontaktbahnen angebracht. Von der zu der verkappenden Oberfläche 6 zur Rückseite werden Sackloch-Durchkontaktierungen von den Bondflächen der Oberfläche 6 zur Rückseite und den Kontaktbahnen angebracht. Dann wird der IC-Baustein 7 montiert und mit den Bondinseln kontaktiert. Danach wird der Verlauf des Anspritzkanals 5 an der Oberfläche 6 mit einem Trennlack als Oberflächenschutz T bedruckt. Die Spritzmasse S wird mit der Verschließpresse bei ca. 180°C angespritzt. Dabei werden im Streifen B gleichzeitig mehrere Verkappungen K gebildet. Anschließend wird der Streifen B entformt und die Spritzmasse S, die im Bereich der Anspritzkanäle 4 an den Oberflächen 6 haftet, zusammen mit dem Trennlack rückstandsfrei entfernt. Danach werden die Module M durch Wärmeeinwirkung in eine stabile Endform überführt.

## Patentansprüche

1. Verfahren zum Verkappen wenigstens eines Chipkarten-Moduls an der der Kontaktierungsseite abgewandten Oberfläche in einer die Verkappungsumrisse definierenden, wenigstens einen Anspritzkanal aufweisenden Form und mit duroplastischer Niederdruck-Spritzmasse, die an ein wenigstens einen IC-Baustein oder andere aktive oder passive elektronische Komponenten aufweisendes Trägermaterial angespritzt und mit dem Trägermaterial verbunden wird, **dadurch gekennzeichnet, daß** in einem nicht metallischen plättchenförmigen Trägermaterial vor dem Anspritzen der Niederdruck-Spritzmasse an der anzuspritzenden Oberfläche eine Vielzahl von oberflächlich offenen, sich ausgehend von der Oberfläche erweiternden Verankerungshohlräumen hergestellt wird, und daß die Niederdruck-Spritzmasse mit einem das Abheben der fertigen Verkappung von der Oberfläche nach oben verhindernden Formschluß bis in die Verankerungshohlräume eingespritzt wird.

2. Verfahren nach Anspruch 1, **dadurch gekennzeichnet, daß** die den Anspritzkanal der Form begrenzende Oberfläche des Trägermaterials im Bereich des Anspritzkanals gegen das Anhaften der Niederdruck-Spritzmasse abgedeckt wird.

3. Verfahren nach Anspruch 1, **dadurch gekennzeichnet, daß** die Verankerungshohlräume durch eine chemische Behandlung, durch eine spanende Bearbeitung oder durch eine Behandlung mit energiereichen Strahlen gebildet werden.

4. Verfahren nach den Ansprüche 1 und 3, **dadurch gekennzeichnet, daß** die Verankerungshohlräume im aus einer Epoxid-Glasfasermischung bestehenden Trägermaterial durch eine durch Abätzen einer zuvor mit dem Trägermaterial formschlüssig verbundenen Dentrit-Kupfer-Auflage freigelegten Oberflächenstruktur gebildet werden.

5. Verfahren nach den Ansprüchen 1 und 3, **dadurch gekennzeichnet, daß** konische Bohrungen oder Gewindebohrungen hergestellt werden.

6. Verfahren nach wenigstens einem der Ansprüche 1 bis 5, **dadurch gekennzeichnet, daß** die Niederdruck-Spritzmasse in niedrig viskosem Zustand bei einer Temperatur von ca. 180° an die Oberfläche und in die Verkankerungshohlräume gespritzt wird.

7. Chipkartenmodul, mit einem aus isolierendem Trägermaterial bestehenden Träger an dem wenigstens ein IC-Baustein, Kontaktflächen und Kontaktbrücken stoffschlüssig angebracht sind, und mit einer auf der den Kontaktflächen abgewandten Oberfläche des Trägers angeordneten Verkappung aus in einem Formhohlraum an die Oberfläche angespritzter, ausgehärteter duroplastischer Niederdruck-Spritzmasse, **dadurch gekennzeichnet, daß** die Niederdruck-Spritzmasse (S) zusätzlich zu chemischen Haftung an der Oberfläche 6 des Trägers (C) in zur Oberfläche (6) offenen, sich ausgehend von der Oberfläche (6) erweiternden Verankerungshohlräumen (A) des Trägermaterials (18) formschlüssig verankert ist.

8. Chipkartenmodul nach Anspruch 7, **dadurch gekennzeichnet, daß** auf der Oberfläche (6) des Trägermaterials (18) im Bereich wenigstens eines an die Oberfläche (6) angrenzenden Anspritzkanals (5) ein, vorzugsweise abnehmbarer, Oberflächenschutz (T) aufgebracht ist, vorzugsweise ein Trennlack oder eine Auflage wie ein Klebestreifen oder eine Klebefolie.

9. Chipkartenmodul nach Anspruch 7, **dadurch gekennzeichnet, daß** die Verankerungshohlräume (A) im aus einer Epoxid-Glasfasermischung bestehenden Trägermaterial (18) in einer Oberflächenstruktur (D) ausgebildet sind, die durch Abätzen einer zuvor mit dem Trägermaterial (18) formschlüssig verbundenen Dentrit-Kupfer-Auflage freigelegt ist.

10. Chipkartenmodul nach Anspruch 7, **dadurch gekennzeichnet, daß** als Verankerungshohlräume (A) Sackbohrungen (9, 10, 16) mit konischer Grundform vorgesehen sind.

11. Chipkartenmodul nach wenigstens einem der Ansprüche 7 bis 10, **dadurch gekennzeichnet, daß** die Verankerungshohlräume (A) ganzflächig verteilt oder in wenigstens einem lokal begrenzten Bereich der anzuspritzenden Oberfläche (8) vorgesehen sind, und daß die Verkappung (K) zumindest den die Verankerungshohlräume (A) enthaltenden Bereich abdeckt, und eine runde, ovale, viereckige oder vieleckige Begrenzung aufweist.

12. Chipkartenmodul, nach wenigstens einem der Ansprüche 7 bis 11, **dadurch gekennzeichnet, daß** im Verlauf nach innen von der Senkrechten auf die Oberfläche des Trägermaterials abweichende Verankerungshohlräume (A) mit Hinterschneidungen und gegebenenfalls unebener Hohlraumwand vorgesehen sind.

## Claims

1. Method of encapsulating at least one chip card module on the surface remote from the contacting side in a mould that defines the encapsulation contours and has at least one runner and using thermosetting low-pressure injection-moulding material that injects onto a carrier material that carries at least one IC chip or other active or passive electronic components and becomes joined to the carrier material, **characterized in that** a multiplicity of superficially open anchorage cavities that widen as they proceed from the surface are produced in a nonmetallic, plate-shaped carrier material prior to the moulding-on of the low-pressure injection-moulding material on the surface to be injection-moulded onto, and **in that** the low-pressure injection-moulding material is injected down into the anchorage cavities with a shape-locking form that prevents the finished encapsulation from being lifted upwards off the surface.

2. Method according to Claim 1, **characterized in that** that surface of the carrier material that forms the boundary of the runner of the mould is protected in the region of the runner against the adhesion of the low-pressure injection-moulding material.

3. Method according to Claim 1, **characterized in that** the anchorage cavities are formed by a chemical treatment, by a machining operation or by treatment with high-energy rays.

4. Method according to Claims 1 and 3, **characterized in that** the anchorage cavities are formed in the carrier material composed of an epoxy/glass-fibre mixture by a surface structure exposed by etch removal of a dendrite copper overlay previously joined to the carrier material in a shape-locked manner.

5. Method according to Claims 1 and 3, **characterized in that** conical bores or threaded bores are produced.

6. Method according to at least one of Claims 1 to 5, **characterized in that** the low-pressure injection-moulding material is injected in a low-viscosity state at a temperature of approximately 180° onto the surface and into the anchorage cavities.

7. Chip card module having a carrier composed of insulating carrier material on which at least one IC chip, contact surfaces and contact bridges are provided in a materially locked manner, and having an encapsulation that is disposed on that surface of the carrier that is removed from the contact surfaces and that is composed of a cured thermosetting, low-pressure injection-moulding material injected onto the surface in a mould cavity, **characterized in that**, in addition to chemical adhesion to the surface (6) of the carrier (C), the low-pressure injection-moulding material (S) is anchored in a shape-locked manner in open anchorage cavities (A) of the carrier material (18) that widen as they proceed from the surface (6).

8. Chip card module according to Claim 7, **characterized in that**, in the region of at least one runner (5) adjoining the surface (6), a preferably removable surface protection (T), preferably a release lacquer or an overlay such as an adhesive tape or an adhesive film, is applied to the surface (6) of the carrier material (18).

9. Chip card module according to Claim 7, **characterized in that** the anchorage cavities (A) in the carrier material (18) composed of an epoxy/glass-fibre mixture are formed in a surface structure (D) that is exposed by etch removal of a dendrite copper overlay previously joined in a shape-locked manner to the carrier material (18).

10. Chip card module according to Claim 7, **characterized in that** blind bores (9, 10, 16) having a conical basic shape are provided as anchorage cavities (A).

11. Chip card module according to at least one of Claims 7 to 10, **characterized in that** the anchorage cavities (A) are distributed over the entire surface or are provided in at least one locally bounded region of the surface (8) to be injection-moulded onto and **in that** the encapsulation (K) covers at least the region containing the anchorage cavities (A) and has a round, oval, rectangular or polygonal boundary.

12. Chip card module according to at least one of Claims 7 to 11, **characterized in that** anchorage cavities (A) that deviate from the vertical to the surface of the carrier material in their extension inwards are provided with undercuts and, optionally, an uneven cavity wall.

## Revendications

1. Procédé pour encapsuler au moins un module de carte à puce sur la surface opposée au coté d'établissement de contact dans un moule définissant les contours d'encapsulage et présentant au moins un canal d'injection et avec une matière duroplastique à mouler par injection à basse pression, qui est injectée sur un matériau support présentant au moins une puce de CI ou d'autres composants électroniques actifs ou passifs et est reliée au matériau support, **caractérisé en ce qu'**une pluralité de cavités d'ancrage ouvertes en surface et s'élargissant à partir de la surface est fabriquée dans un matériau support en forme de plaque non métallique avant l'injection de la matière à mouler à basse pression sur la surface à injecter, et **en ce que** la matière à mouler par injection à basse pression est injectée jusque dans les cavités d'ancrage avec une fermeture par complémentarité de forme qui empêche le soulèvement de l'encapsulage terminé de la surface vers le haut.

2. Procédé selon la revendication 1, **caractérisé en ce que** la surface du matériau support, qui délimite le canal d'injection du moule, est recouverte dans la zone du canal d'injection contre l'adhérence de la matière à mouler par injection à basse pression.

3. Procédé selon la revendication 1, **caractérisé en ce que** les cavités d'ancrage sont formées par un traitement chimique, un traitement d'usinage ou un traitement avec des rayons riches en énergie.

4. Procédé selon les revendications 1 et 2, **caractérisé en ce que** les cavités d'ancrage sont formées dans le matériau support à base d'un mélange de résine d'époxy et de fibre de verre par une structure de surface mise à nu par gravure d'une couche de dendrite/cuivre reliée auparavant au matériau support par complémentarité de forme.

5. Procédé selon les revendications 1 et 3, **caractérisé en ce que** des alésages coniques ou alésages filetés sont fabriqués.

6. Procédé selon au moins l'une des revendications 1 à 5, **caractérisé en ce que** la matière à mouler par injection à base pression est injectée à l'état faiblement visqueux à une température d'environ 180° sur la surface et dans les cavités d'ancrage.

7. Module de carte à puce, avec un support à base de matériau support isolant, sur lequel au moins une puce de CI, des surfaces de contact et des ponts de contact sont disposés au niveau du matériau, et avec un encapsulage disposé sur la surface du support opposée aux surfaces de contact, à base de matière duroplastique à mouler par injection à basse pression à la surface dans une empreinte et durcie, **caractérisé en ce que** la matière à mouler par injection à basse pression (S) est ancrée par conjugaison de forme en supplément de l'adhérence chimique à la surface 6 du support (C) dans des cavités d'ancrage (A) du matériau support (18) ouvertes vers la surface (6) et s'élargissant à partir de la surface (6).

8. Module de carte à puce selon la revendication 7, **caractérisé en ce que** sur la surface (6) du matériau support (18), dans la zone d'au moins un canal d'injection (T) contigu à la surface (6), est appliquée une protection de surface (T), de préférence amovible, de préférence une laque de séparation ou un support comme une bande adhésive ou un film adhésif.

9. Module de carte à puce selon la revendication 7, **caractérisé en ce que** les cavités d'ancrage (A) sont réalisées dans le matériau support (18) à base d'un mélange de résine époxy et de fibre de verre dans une structure de surface (D), qui est mise à nu par gravure d'une couche de dendrite-cuivre reliée auparavant au matériau support (18) par conjugaison de forme.

10. Module de carte à puce selon la revendication 7, **caractérisé en ce que** des alésages borgnes (9, 10, 16) avec une forme de base conique sont prévus comme cavités d'ancrage (A).

11. Module de carte à puce selon au moins l'une quelconque des revendications 7 à 10, **caractérisé en ce que** les cavités d'ancrage (A) sont réparties sur toute la surface ou sont prévues dans au moins une zone limitée localement de la surface (8) à injecter et **en ce que** l'encapsulage (K) recouvre au moins la zone incluant les cavités d'ancrage (A), et présente une partie limitée ronde, ovale, quadrangulaire ou polygonale.

12. Module de carte à puce selon au moins l'une quelconque des revendications 7 à 11, **caractérisé en ce que**, dans le tracé vers l'intérieur, il est prévu des cavités d'ancrage (A) divergentes par rapport à la perpendiculaire à la surface du matériau support avec des contre-dépouilles et une paroi de cavité éventuellement inégale.
